# EUROPEAN PATENT APPLICATION

(11) **EP 2 124 000 A1**
(43) Date of publication of application: **25.11.2009**
(21) Application number: 07738323.0
(22) Date of filing: 12.03.2007
(51) Int. Cl.: F25D 11/02, F25B 5/02

(54) **COOLING STORAGE BUILDING AND METHOD OF OPERATING THE SAME**

(71) Applicant: Hoshizaki Denki Kabushiki Kaisha, Toyoake-shi Aichi 470-1194 (JP)
(72) Inventor: KONDOU, Naoshi, Toyoake-shi Aichi 470-1194 (JP); HIRANO, Akihiko, Toyoake-shi Aichi 470-1194 (JP); YATORI, Masahide, Toyoake-shi Aichi 470-1194 (JP); KAGA, Shinichi, Toyoake-shi Aichi 470-1194 (JP); TASHIRO, Hideyuki, Toyoake-shi Aichi 470-1194 (JP)
(74) Representative: Müller-Boré & Partner Patentanwälte
(86) International application number: PCT/JP2007/054851
(87) International publication number: WO 2008/111159

(57) **Abstract**

PROBLEM TO BE SOLVED: To provide a cooling storage, in which a refrigerant from one compressor is selectively supplied to multiple evaporators respectively disposed in multiple storage rooms having different thermal loads, and prevent any temperature rise of a storage room of higher thermal load.

SOLUTION: The liquid refrigerant from the compressor 20 and the condenser 21 is alternately supplied to the cooling device for the freezing room 27F and the evaporator for the refrigeration room 27R through the three-way valve 24, so that the freezing room and the refrigeration room are alternately cooled. Even if any one of the freezing room 13F and the refrigeration room 13R reached the lower limit set temperature on ahead, the freezing room 13F (the storage room of higher thermal load) is always cooled last and certainly cooled until it reaches the lower limit set temperature.

## Description

### Technical Field

The present invention relates to a cooling storage, which comprises multiple evaporators and supplies a refrigerant to these evaporators from one compressor, and an operating method of the same.

### Background Art

As one of this kind of cooling storages, for example, Patent literature 1 as below has been disclosed, in which heat insulating freezing room and refrigeration room are partitioned in a heat insulation storage body, whi le an evaporator is provided in each room, so that a refrigerant is alternately supplied to each of these evaporators from one compressor to produce cooling action.

In this kind of refrigerating cycle of a refrigerator, a refrigerant is compressed by the compressor and then liquefied by the condenser, so as to be alternately supplied to the evaporator for freezing room and the evaporator for refrigeration room that are connected to the exit side of a three-way valve respectively via a capillary tube. The operation of the compressor is stopped on condition that both freezing room and refrigeration room are cooled down to the lower limit set temperature, and when any one of them then marked the upper limit set temperature, the compressor is restarted so as to supply the refrigerant to the evaporator in the present room.
[Patent Literature 1]: Japanese Unexamined Patent Publication No. 2003-214748

The preset temperature of the refrigeration room is normally 5 degrees, while that of the freezing room is -20 degrees, and both the rooms have therefore a significant difference in thermal loads in view of the refrigerating cycle. In a stopped state of the cooling operation of the freezing room, the freezing room temperature rises relatively early. Particularly, the temperature rise of the freezing room occurs much earlier for such as a commercial refrigerator, which is used in conditions where its door is frequently opened and closed and the ambient temperature is high. Therefore, in this kind of refrigerator, restart of the compressor is prohibited after stopping the compressor until the high/low pressure difference between the sucking side and the discharging side of the compressor is dissolved (because, if the compressor is restarted with the pressure difference still large, it becomes overloaded). Because of this, when the door of the freezing room is frequently opened and closed during the forced stopping time of the compressor, the temperature of the freezing room rises and this might negatively affect inside the food.

The present invention has been completed based on the above circumstances, and its purpose is to provide a cooling storage and an operating method of the same, inwhicha refrigerant from one compressor is selectively supplied to multiple evaporators respectively disposed in multiple storage rooms having different thermal loads, and is capable of preventing any temperature rise of a storage room of higher thermal load.

### Disclosure of the Invention

In order to achieve the above-mentioned objectives, the operating method according to the present invention is for a cooling storage which comprises: a compressor, a condenser, a valve device, a first and a second evaporators, and a throttle device for throttling a refrigerant flowing into each the evaporator, wherein the refrigerant that has been compressed by the compressor and liquefied by the condenser is selectively supplied to the first and the second evaporators by the valve device, so that each of a first and a second storage rooms having different thermal loads is cooled by the first and the second evaporators, and is characterized by stopping the compressor after cooling the storage room of higher thermal load, when stopping operation of the compressor after alternately cooling each first and second storage room by the operation of the compressor.

A cooling storage according to the present invention which employs the above operating method has the following structure. The cooling storage comprises:
a refrigerating cycle comprising the following structures A1 to A6,
   (A1) A compressor for compressing a refrigerant
   (A2) A condenser for releasing heat from the refrigerant compressed by the compressor
   (A3) A valve device, with its entrance connected with the condenser side while its two exits connected respectively with a first and a second refrigerant supply channels, and capable of flow channel switching motion for selectively connecting the entrance side with any one of the first and the second refrigerant supply channels
   (A4) A first and a second evaporators provided respectively in the first and the second refrigerant supply channels
   (A5) A throttle device for throttling the refrigerant flowing into each evaporator
   (A6) A refrigerant circulating channel which commonly connects the refrigerant exit sides of the first and the second evaporators and also connects these sides with a refrigerant sucking side of the compressor
a storage body having a first and a second storage rooms having different thermal loads which are cooled by cold air produced by the first and the second evaporators,
a first and a second storage room temperature sensors for detecting temperature of each of the storage rooms, and
a refrigerating cycle control circuit which operates the compressor when any one of the temperatures of the first and the second storage room detected by these storage room temperature sensors is higher than a preset temperature of each of the storage rooms, while at the same time, operating the valve device so as to supply a refrigerant to the evaporator in the present storage room, and furthermore, stops the operation of the compressor when the following conditions (B1) and (B2) are satisfied.
   (B1) Regarding one of the first and the second storage rooms that has a lower thermal load, when the storage room temperature thereof fell below a preset temperature of the present storage room on ahead, the cooling operation of the other storage room was continued by conducting the flow channel switching motion of the valve device after said temperature fall, and the storage room temperature therefore fell below the preset temperature of the present storage room.
   (B2) Regarding one of the first and the second storage rooms that has a higher thermal load, when the storage room temperature thereof fell below a preset temperature of the present storage room on ahead, the cooling operation of the other storage room was continued by conducting the flow channel switching motion of the valve device after said temperature fall. When the storage room temperature therefore fell below the preset temperature of the present storage room, the flow channel switching motion was conducted so as to cool the storage room of higher thermal load again, and thus, the storage room temperature fell below the preset temperature of the present storage room.

According to the present invention, when the storage room temperature of any one of the first and the second storage rooms exceeds the preset temperature, the operation of the compressor is started so as to supply a refrigerant to the evaporator in the present storage room. The condition for stopping the operation of the compressor is as mentioned above, and therefore, in any cases, the storage room of higher thermal load is always cooled last and certainly cooled until its storage room temperature reaches the preset temperature, so that a rise of the storage room temperature reaching beyond the appropriate range during the subsequent stopping period of the compressor can be prevented from happening.

### Brief Description of the Drawings

Fig. 1 is an overall cross-sectional view showing one embodiment of the present invention;
Fig. 2 is a block diagram of a refrigerating cycle;
Fig. 3 is a flow chart showing cooling operation;
Fig. 4 is a graph showing the pressure equilibrium status after stopping a compressor;
Fig. 5 is a time chart showing temperature change in a case where a refrigeration room reaches the lower limit set temperature on ahead;
Fig. 6 is a time chart showing temperature change in a case where a freezing room reaches the lower limit set temperature on ahead.

### Description of Symbols

10...storage body 20...compressor 21...condenser 24...three-way valve (valve device) 25F, 25R...first and second refrigerant supply channel 26F, 26R...capillary tube (throttle device) 27F...freezing room evaporator (first evaporator) 27R...refrigeration room evaporator (second evaporator) 31...refrigerant circulating channel 40...refrigerating cycle 50... refrigerating cycle control circuit 51F... F sensor (first storage room temperature sensor) 51R...R sensor (second storage room temperature sensor)

### Best Mode for Carrying Out the Invention

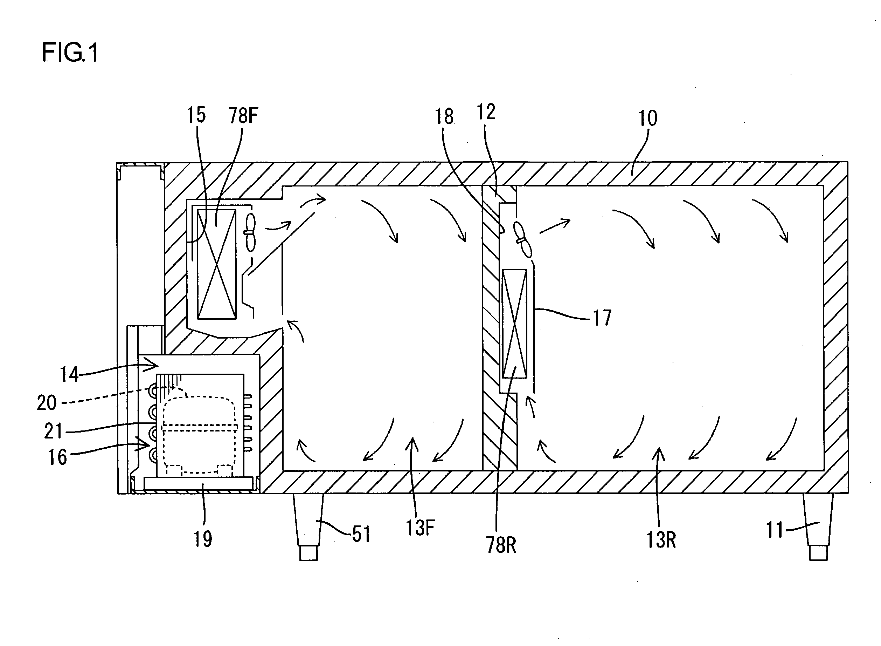

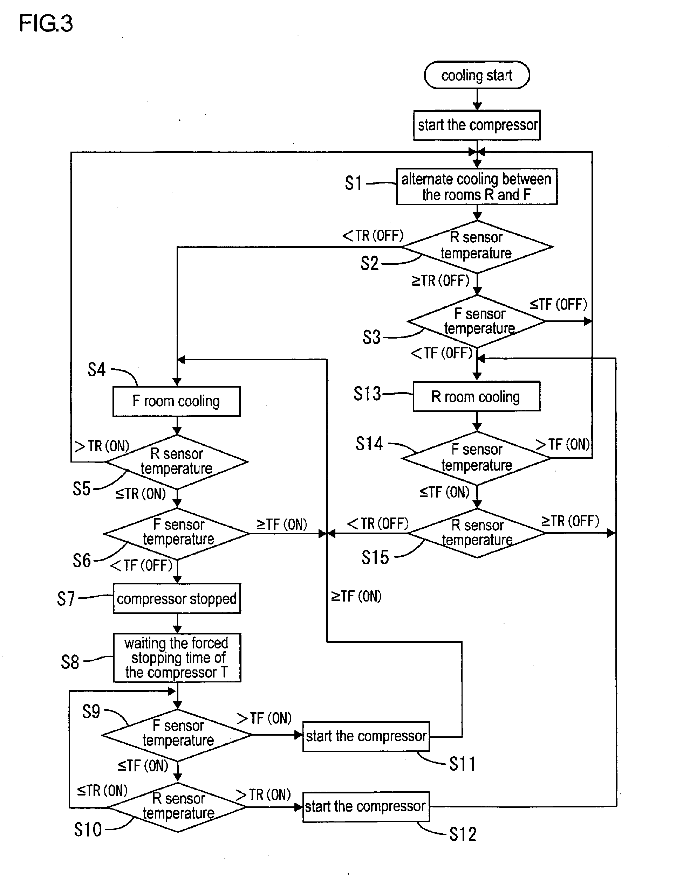

As referring now to Figs. 1 to 6, one embodiment according to the present invention is described. The present embodiment is illustrated by example by being applied to a commercial lateral (table type) refrigerator-freezer. First, its overall structure is described as referring firstly to Fig. 1. The symbol 10 represents a storage body, composed of a heat insulating box body, that is horizontally long and opening in the front surface, and supported by legs 11 provided in four corners on the bottom surface. The inside of the storage body 10 is divided into right and left sides by a heat insulating partition wall 12. The left and relatively narrower is difined as a freezing room 13F corresponding to a first storage room. The right and wider side is difined as a refrigeration room 13R corresponding to a second storage room. In addition, although not shown in the drawings, pivotable heat insulating door is attached to the opening on the front surface of the freezing room 13F and the refrigeration room 13R so as to be capable of opening and closing.

Provided in the left side when viewed from the front of the storage body 10 is a mechanical room 14. Aheat insulating evaporator room 15 for the freezing room 13F which is connected with the freezing room 13F is protrudingly provided in the back of the upper part within the mechanical room 14, and a duct 15A and an evaporator fan 15B are provided therein. While in the lower part thereof, a compressor unit 16 is removably housed. And also, an evaporator room 18 for the refrigeration room 13R is formed on the surface of the partition wall 12 in the side of the refrigeration room 13R by stretching the duct 17, and the evaporator fan 18A is provided therein.

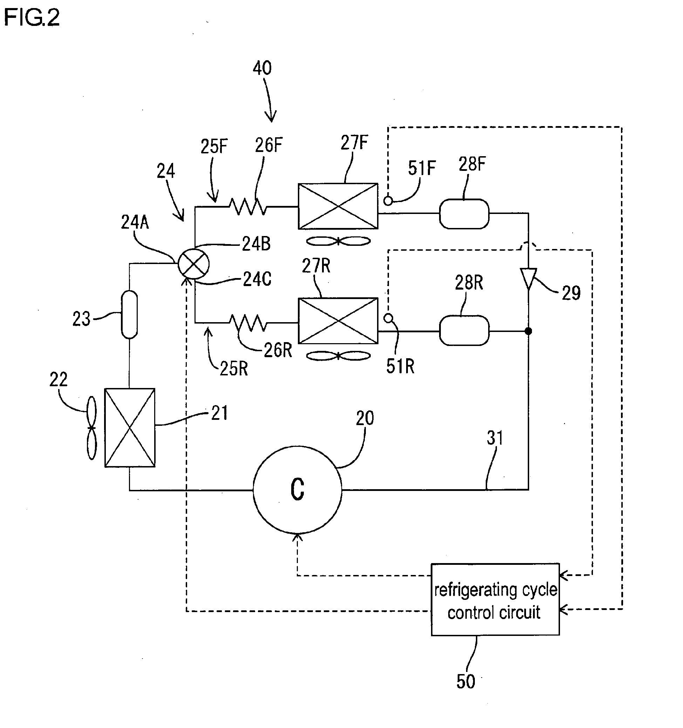

The compressor unit 16 is provided with a compressor 20 for compressing a refrigerant by being driven by a motor not shown and a condenser 21 connected with the refrigerant discharging side of the compressor 20, both disposed on a base 19, so as to be taken in and out of the mechanical room 14. A condenser fan 22 (shown only in Fig. 2) for cooling the condenser 21 by air-cooling is also mounted in the compressor unit 16.

As shown in Fig. 2, the exit side of the condenser 21 is connected with an entrance 24A of a three-way valve 24 as a valve device via a drier 23. The three-way valve 24 has one entrance 24A and two exits 24B and 24C, and these exits 24B and 24C are respectively continued to a first and a second refrigerant supply channel 25F and 25R. This three-way valve 24 is capable of the flow channel switchingmotion for selectively connecting the entrance 24A with any one of the first and the second refrigerant supply channels 25F and 25R, as well as the common communicatingmotion for commonly connecting the entrance 24Awith both the first and the second refrigerant supply channels 25F and 25R.

A capillary tube 26F in the freezing room side corresponding to the throttle device and an evaporator for freezing room 27F (the first evaporator) housed within the evaporator room 15 in the side of the freezing room 13F are provided in the first refrigerant supply channel 25F. And also, a capillary tube 26R in the refrigeration room side corresponding also to the throttle device and an evaporator for refrigeration room 27R (the second evaporator) housed within the evaporator room 18 in the side of the refrigeration room 13R are provided in the second refrigerant supply channel 25R. The refrigerant exits of both the cooling devices 27F and 27R are commonly and sequentially connecting an accumulator 28F, a check valve 29, and an accumulator 28R, while being provided with a refrigerant circulating channel 31 branched off from the downstream side of the check valve 29 and continued to the sucking side of the compressor 20. The above-mentioned refrigerant circulating channel running from the discharging side of the compressor 20 back to the sucking side composes a known refrigerating cycle 40 for supplying the refrigerant from one compressor 20 to two evaporators 27F and 27R, and capable of shifting the supplying destination of a liquid refrigerant with the three-way valve 24.

The above-mentioned compressor 20 and the three-way valve 24 are controlled by a refrigerating cycle control circuit 50 having a built-in CPU. This refrigerating cycle control circuit 50 is given signals from a F sensor 51F corresponding to the first storage room temperature sensor for detecting the air temperature inside the freezing room 13F and from a R sensor 51R corresponding to the second storage room temperature sensor for detecting the air temperature inside the refrigeration room 13R, and when a detected temperature of the F sensor 51F is higher than the upper limit set temperature (TF(ON)) of the freezing room 13F, or when a detected temperature of the R sensor 51R is higher than the upper limit set temperature (TR(ON)) of the refrigeration room 13R, the operation of the compressor 20 is started so as to begin the cooling operation. The switching motion of the three-way valve 24 as well as the stopping motion of the compressor 20 after the start of the cooling operation is as follows.

### (Cooling start - FR alternate cooling)

With application of the power source to the cooling storage, the operation start of the compressor 20 causes the three-way valve 24 to perform the flow channel switching motion at constant intervals (step S1) for alternately switching situations between the entrance 24A be connected only with the first refrigerant supply channel 25F side (hereinafter, this status is referred to as "F side opened-state") and the entrance 24A be connected only with the second refrigerant supply channel 25R side (hereinafter, this status is referred to as "R side opened-state"), so as to alternately cool the refrigeration room 13R and freezing room 13F (alternate cooling between the rooms R and F).

Next, in the step S2, the temperature of the refrigeration room 13R is compared with the lower limit temperature of the refrigeration room TR (OFF) that has been previously set, on the basis of a signal sent from the R sensor 51R, and furthermore, in the step S3, the temperature of the freezing room 13F is compared with the lower limit temperature of the freezing room TF (OFF) that has been previously set, on the basis of a signal sent from the F sensor 51F. At the start of the cooling operation, both temperatures within the rooms are not reaching each lower limit temperature, and the process therefore goes from the step S3 back to the step S1, so that the three-way valve 24 repeats the above-mentioned FR alternate cooling operation that alternately repeats the "F side opened-state" and the "R side opened-state" at constant intervals.

### (Only F cooling)

When the cooling proceeded and the temperature within the refrigeration room 13R fell below the lower limit temperature of the refrigeration room TR (OFF), the process moves from the step S2 to the step S4, so that the three-way valve 24 switches to the "F side opened-state" and cools only the freezing room 13F. After that, the process moves on to the step S5 and judges whether or not the temperature within the refrigeration room 13R is reaching the upper limit set temperature TR (ON) based on the signal sent from the R sensor 51.

In general, the refrigeration room 13R is sufficiently cooled down right after the end of the FR alternate cooling, and thus, the process reaches the next step S6 to judge whether or not the temperature within the freezing room 13F is reaching the lower limit temperature of the freezing room TF (OFF) on the basis of the signal sent from the F sensor 51F, and then repeats the steps from S4 to S6 until the temperature reaches the lower limit temperature of the freezing room TF (OFF). As a result, only the freezing room 13F is intensively cooled down. Additionally, when the temperature of the refrigeration room 13R rises during the cooling operation of the above, the process moves from the step S5 back to the step S1 and resumes the FR alternate cooling. That means, the temperature rise of the refrigeration room 13R can be quickly controlled since the cooling operation of the refrigeration room 13R is also resumed.

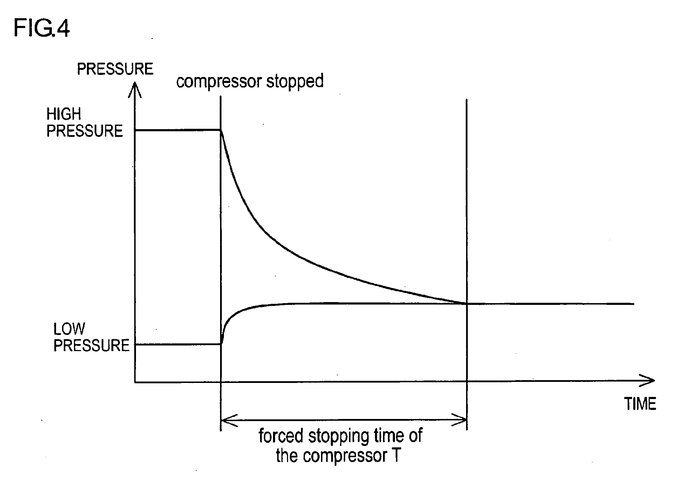

The present "Only F cooling" cools the freezing room 13F sufficiently, and when the temperature within the room reaches the lower limit temperature of the freezing roomTF (OFF), the process moves from the step S6 to the step S7 and stops the operation of the compressor 20, so as to prohibit the restart of the compressor 20 until a forced stopping time of the compressor T has passed (step S8). While this forced stopping time of the compressor T is passing by, the liquid refrigerant supplied to the cooling device for the freezing room 27F evaporates, and the high/low pressure difference of the compressor 20 is therefore dissolved as shown in Fig. 4.

### (Restart of the compressor)

When the forced stopping time of the compressor T has passed in the step S10, the process goes on to the step S13, and the temperature within the freezing room 13F is compared with the upper limit set temperature of the freezing room TF (ON) which has been previously set, on the basis of the signal sent from the F sensor 51F. And then, further in the step S14, the temperature within the refrigeration room 13R is compared with the upper limit set temperature of the refrigeration room TR (ON) which has been previously set, on the basis of the signal sent from the R sensor 51R. When the temperature within the freezing room 13F or the refrigeration room 13R is higher than the upper limit set temperature in any one of the above steps, the compressor 20 is started (steps S11 and S12), and the process moves to the step S4 or the step S13, so that the cooling of the freezing room 13F or the refrigeration room 13R is resumed. In the present embodiment, as mentioned above, the operation of the compressor 20 is started on condition that the temperature within any one of the freezing room 13F and the refrigeration room 13R exceeds the upper limit set temperature.

When the temperature within the freezing room 13F rises after resuming the cooling of the refrigeration room 13R in the step S13, the process goes back to the FR alternate cooling (steps S14 to S1) and the cooling of the freezing room 13 is resumed.

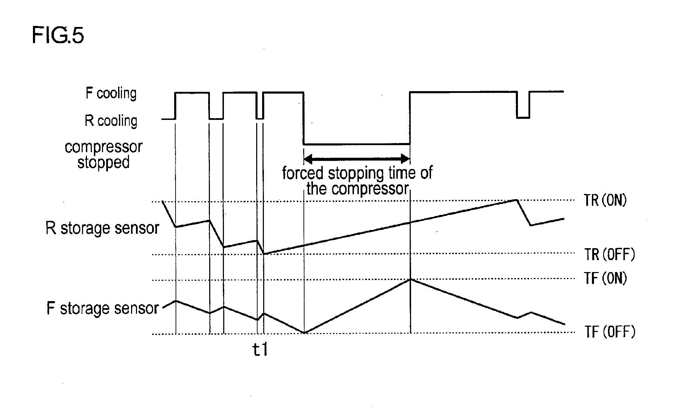

During the FR alternate cooling, as mentioned, when the temperature of the refrigeration room 13R (the storage room of lower thermal load) reaches the lower limit set temperature of the refrigeration room TR (OFF) (step S2) on ahead, then the three-way valve 24 conducts the flow channel switching motion to switch to the "F side opened-state", so that the "Only Fcooling" is performed (step S4). This stops the operation of the compressor 20 when the temperature within the freezing room 13F is lowered to the lower limit set temperature of the freezing room TF (OFF) (step S7). The illustrative example of the above cooling operation is as shown in Fig. 5, and it can be seen that the refrigeration room 13R is reaching the lower limit set temperature TR (OFF) ahead of the freezing room 13F at the time t1.

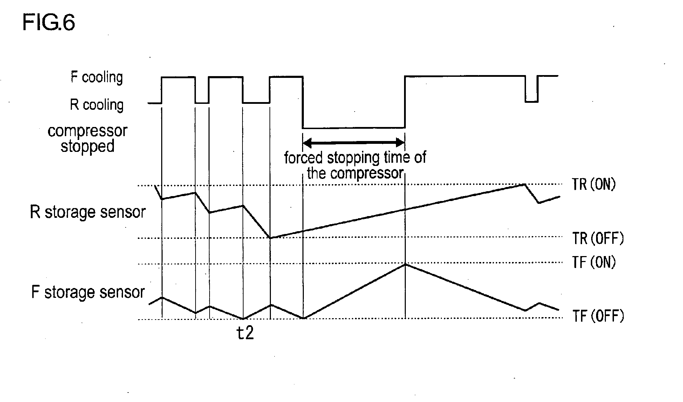

Reversely, during the FR alternate cooling, when the temperature of the freezing room 13F (the storage room of higher thermal load) reaches the lower limit set temperature of the freezing room TF (OFF) (step S3) on ahead, then the three-way valve 24 conducts the flow channel switching motion to switch to the "R side opened-state" in the step S13, so as to switch to the cooling of the refrigeration room 13R ("R room cooling"). As a result, according to the present embodiment, when the temperature within the refrigeration room 13R falls to the lower limit set temperature of the refrigeration room TR (OFF) (step S15), the process moves again to the "F room cooling" (step S4), though conventionally, the operation of the compressor 20 was stopped here since both F and R rooms were regarded as being cooled. This stops the operation of the compressor 20 when the temperature of the freezing room 13F is lowered to the lower limit set temperature of the freezing room TF (OFF) (step S7). The illustrative example of the above cooling operation is as shown in Fig. 6, in which the freezing room 13F is reaching the lower limit set temperature TF (OFF) ahead of the refrigeration room 13R at the time t2.

In short, according to the present embodiment, the condition for stopping the compressor 20 during the execution of the FR alternate cooling is as follows in (b1) and (b2): (b1) When the temperature in the refrigeration room 13R fell below the lower limit set temperature on ahead, the flow channel switching motion of the three-way valve 24 was then conducted so as to continue the cooling operation of the freezing room 13F, and after that, the temperature fell below the lower limit set temperature of the freezing room TF (OFF) (see Fig. 5). (b2) When the temperature in the freezing room 13F fell below the lower limit set temperature of the freezing room TR (OFF) on ahead, the flow channel switching motion of the three-way valve 24 was then conducted so as to continue the cooling operation of the refrigeration room 13R, and after that, when the temperature within the refrigeration room 13R fell below the lower limit set temperature of the refrigeration room TR (OFF), the flow channel switching motion of the three-way valve 24 was then again conducted. This caused the cooling operation of the freezing room 13F to be resumed, and thus, the temperature in the freezing room 13F fell below the lower limit set temperature of the freezing room TF (OFF) (see Fig. 6).

Therefore, even when any one of the freezing room 13F and the refrigeration room 13R reached the lower limit set temperature on ahead, the freezing room 13F (the storage room of higher thermal load) is always cooled last and certainly cooled until it reaches the lower limit set temperature, and therefore, the temperature in the freezing room 13F can be prevented from rising beyond the appropriate range during the subsequent stopping period of the compressor 20.

With embodiments of the present invention described above with reference to the accompanying drawings, it is to be understood that the invention is not limited to those precise embodiments, and the embodiment as below, for example, can be within the scope of the present invention.

(1) In the above embodiment, a cooling storage comprising a freezing room and a refrigeration room is explained by example, however, the present invention is not limited to this, and may be applied to a cooling storage comprising a refrigeration room, a thawing room, or two refrigeration rooms or two freezing rooms having different storage temperatures. In short, the present invention may be broadly applied to a cooling storage comprising storage rooms having different thermal loads, wherein a refrigerant is supplied to evaporators disposed in each storage room from a common compressor shared between the evaporators.

## Claims

1. A method of operating a cooling storage comprising:
a compressor, a condenser, a valve device, a first and a second evaporators, anda throttle device for throttling the refrigerant flowing into each the evaporator, wherein
the refrigerant that has been compressed by the compressor and
liquefied by the condenser is selectively supplied to the first and the second evaporators by the valve device, so that each of a first and a second storage rooms having different thermal loads is cooled by the first and the second evaporators, and
is **characterized by** stopping the operation of the compressor after cooling the storage room of higher thermal load ahead on, when stopping operation of the compressor after alternately cooling each the first and the second storage room by the operation of the compressor.

2. A cooling storage comprising:
a refrigerating cycle comprising the following structures A1 to A6,
(A1) A compressor for compressing a refrigerant
(A2) A condenser for releasing heat from the refrigerant compressed by the compressor
(A3) A valve device, with its entrance connected with the condenser side while its two exits connected with a first and a second refrigerant supply channels, and capable of flow channel switching motion for selectively connecting the entrance side with any one of the first and the second refrigerant supply channels
(A4) A first and a second evaporators provided respectively in the first and the second refrigerant supply channels
(A5) A throttle device for throttling the refrigerant flowing into each evaporator
(A6) A refrigerant circulating channel which commonly connects the refrigerant exit sides of the first and the second evaporators and also connects these sides with a refrigerant sucking side of the compressor
a storage body having a first and a second storage rooms having different thermal loads which are cooled by cold air produced by the first and the second evaporators;
a first and a second storage room temperature sensors for detecting temperature of each of the storage rooms; and
a refrigerating cycle control circuit which operates the compressor when any one of the temperatures of the first and the second storage room detected by these storage room temperature sensors is higher than a preset temperature of each of the storage rooms, while at the same time, operating the valve device so as to supply a refrigerant to the evaporator in the present storage room, and furthermore, stops the operation of the compressor when the following conditions (B1) and (B2) are satisfied,
(B1) Regarding one of the first and the second storage rooms that has a lower thermal load, when the storage room temperature thereof fell below a preset temperature of the present storage room on ahead, the cooling operation of the other storage room was continued by conducting the flow channel switching motion of the valve device after said temperature fall, and the storage room temperature therefore fell below the preset temperature of the present storage room.
(B2) Regarding one of the first and the second storage rooms that has a higher thermal load, when the storage room temperature thereof fell below a preset temperature of the present storage room on ahead, the cooling operation of the other storage room was continued by conducting the flow channel switching motion of the valve device after said temperature fall. When the storage room temperature therefore fell below the preset temperature of the present storage room, the flow channel switching motion was conducted so as to cool the storage room of higher thermal load again, and thus, the storage room temperature fell below the preset temperature of the present storage room.

3. The cooling storage according to Claim 2 wherein the first and the second storage rooms are a refrigeration room and a freezing room.

4. The cooling storage according to Claim 2 wherein the valve device is a three-way valve having one entrance and two exits.

5. The cooling storage according to Claim 3 wherein the valve device is a three-way valve having one entrance and two exits.
